(19) Europäisches Patentamt
European Patent Office
Office européen des brevets

(11)  **EP 3 171 128 B1**

## (12)   EUROPEAN PATENT SPECIFICATION

(45) Date of publication and mention
of the grant of the patent:
**22.05.2019 Bulletin 2019/21**

(21) Application number: **15809217.1**

(22) Date of filing: **15.06.2015**

(51) Int Cl.:
***G01B 11/24*** *(2006.01)*   ***G01N 21/95*** *(2006.01)*

(86) International application number:
**PCT/JP2015/067191**

(87) International publication number:
**WO 2015/194506 (23.12.2015 Gazette 2015/51)**

(54) **METHOD FOR CORRECTING SURFACE SHAPE DATA OF AN ANNULAR ROTATING OBJECT, AND DEVICE FOR INSPECTING APPEARANCE OF AN ANNULAR ROTATING OBJECT**

VERFAHREN ZUR KORREKTUR VON FORMDATEN EINES RINGFÖRMIGEN ROTIERENDEN OBJEKTS, UND VORRICHTUNG ZUR INSPEKTION DES AUSSEHENS EINES RINGFÖRMIGEN ROTIERENDEN OBJEKTS

PROCÉDÉ POUR CORRIGER DES DONNÉES DE FORME DE SURFACE D'UN OBJET ROTATIF ANNULAIRE, ET DISPOSITIF POUR INSPECTER L'ASPECT D'UN OBJET ROTATIF ANNULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2014   JP 2014126888**

(43) Date of publication of application:
**24.05.2017 Bulletin 2017/21**

(73) Proprietor: **Bridgestone Corporation
Tokyo 104-8340 (JP)**

(72) Inventor: **TAKEBUCHI Taro
Tokyo 104-8340 (JP)**

(74) Representative: **Oxley, Robin John George
Marks & Clerk LLP
15 Fetter Lane
London EC4A 1BW (GB)**

(56) References cited:
**EP-A1- 1 873 485     EP-A1- 2 390 621
EP-A1- 2 711 693     EP-A1- 2 799 848
EP-A2- 1 967 835     JP-A- 2006 300 619
JP-A- 2011 247 646     JP-A- 2012 242 186
JP-A- 2013 137 239**

**Description**

TECHNICAL FIELD

The present invention relates to a method for correcting surface shape data of an annular rotating body, such as a tire, to be used in inspecting the appearance thereof and an apparatus for inspecting the appearance thereof.

BACKGROUND ART

Known as one of tire inspections is an appearance inspection for determining acceptance or rejection of the tire. In this inspection, the tire surface shape is detected using a light-section method, and the presence or absence of shape defects, such as undesirable bumps, dents, and marks, on the tire surface is checked.

In the light-section method, the images of the portion illuminated by slit light of the surface of an object to be inspected while the object is being moved are captured, and the three-dimensional shape data of the surface of the object to be inspected are measured from the pixel data of the captured images. And when the object to be inspected is an annular rotating body, such as a tire, the surface shape of the whole circumference of the object is detected as the object is turned one revolution about the central axis thereof (see Patent Document 2, for instance) . Attention is also drawn to the disclosures of EP1,873,485, EP2,711,693, EP2,390,621, EP2,799,848, JP2006-300619, JP2012-242186, JP2011-247646 and JP2013-137239.

PRIOR ART DOCUMENT

Patent Document

Patent Document 1: Japanese Unexamined Patent Application Publication No. 2008-221896

SUMMARY OF THE INVENTION

Problem to be Solved by the Invention

There are cases, however, where the object to be inspected is rotated eccentrically and thus there is no agreement between the central axis and the rotational axis of the object to be inspected. In such cases, the three-dimensional shape data of the surface of the object obtained by a conventional method are distorted from the actual shape. The distortion of the object due to eccentricity can be corrected by using certain correction methods, such as the least square method (least square center method) of a circle on the assumption that the object to be inspected is a perfect circle. However, a tire, strictly speaking, is not a perfect circle, and the distortion can get exaggerated unless the tire is fitted on the rim and inflated with the internal pressure. Hence, it has been difficult for a correction method requiring the assumption of a perfect circle to accurately correct the three-dimensional shape data of an annular rotating body having some distorted contour, such as a tire.

Thus, when the object to be inspected is a tire, the measurements have to be made after limiting the distortion of the tire by fitting the tire on the rim and inflating it with air. This, however, takes time, and it is also necessary to eliminate the eccentricity by matching the central axis of the object to be inspected with the rotational axis thereof when it is rotated.

However, an equipment, such as a high-precision centering mechanism, has to be prepared if an agreement between the central axis and the rotational axis of the object to be inspected is to be achieved.

The present invention has been made in view of the foregoing problems, and an object of the invention is to provide a method for accurately correcting surface shape data of an annular rotating body and an apparatus for inspecting the appearance thereof using the correction method, even when the annular rotating body is far from a perfect circle and besides has an eccentricity.

Means for Solving the Problem

The present invention provides a method for correcting three-dimensional shape data on a surface of an annular rotating body, as claimed in claim 1.

In this manner, the data obtained by measurement at equal angles are converted into data equidistantly divided along a planar shape (reference line) of the surface of an annular rotating body. And this equidistantly divided data are reallocated on a perfect circle without changing the circumferential length of the annular rotating body. Then the shape data on the surface of the annular rotating body can be corrected with accuracy.

The present invention also provides an apparatus for inspecting an appearance (surface shape) of an annular rotating body, as claimed in claim 4.

By implementing the configuration as described above, accurate shape data on the surface of the annular rotating body can be obtained. Thus it is possible to perform an appearance inspection of the annular rotating body with accuracy.

BRIEF DESCRIPTION OF THE DRAWINGS

FIG. 1 is an illustration showing a configuration of a tire appearance inspection apparatus according to an embodiment of the present invention.

FIG. 2 is an illustration showing an example of point group data on the cross sections of a sidewall region of a tire obtained by a light-section method.

FIG. 3 is an illustration showing how to set a reference line and reference equiangular division points.

FIG. 4 is an illustration showing how to set reference equidistant division points.

FIG. 5 is an illustration showing how to set a unit normal vector.

FIG. 6 is illustrations showing how to set an interpolation point vector and how to calculate depth-direction data on the interpolation point.

FIG. 7 is an illustration showing how to move interpolation points.

FIG. 8 is a flowchart showing the operation of the tire appearance inspection apparatus.

MODE FOR CARRYING OUT THE INVENTION

Hereinafter, embodiments of the present invention will be described with reference to the drawings.

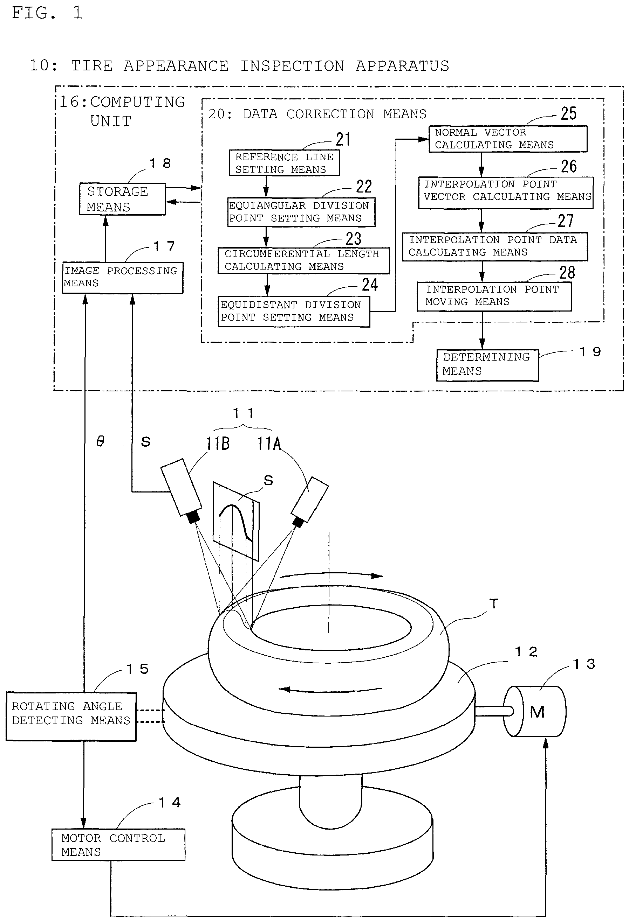

FIG. 1 is an illustration showing a configuration of a tire appearance inspection apparatus 10. As shown in the figure, the tire appearance inspection apparatus 10 includes an image acquisition means 11, a rotating table 12, a drive motor 13, a motor control means 14, a rotating angle detecting means 15, and a computing unit 16.

The respective means from the rotating table 12 through the rotating angle detecting means 15 constitute rotating means for rotating a tire T which is the object to be inspected.

The computing unit 16 includes an image processing means 17, a storage means 18, a determining means 19, and a data correction means 20.

The image acquisition means 11, which comprises a light casting means 11A and an image capturing means 11B, captures images of the surface to be detected of the tire T as the object to be inspected.

The light casting means 11A emits slit light (line light) onto the surface to be detected of the tire T mounted on the rotating table 12. It is, for example, equipped with a monochromatic or white light source, such as a semiconductor laser or halogen lamp.

The image capturing means 11B is equipped with an imaging element disposed planarly and a lens for focusing slit light reflected from the surface of the tire T on the imaging element. It captures an image (slit image S) of the contour of a sidewall surface of the tire T, which is an image of a portion illuminated by the slit light, at every predetermined rotating angle (e.g., 1°) of rotation of the tire T. The image capturing means 11B is an area camera, such as a CCD camera, for instance.

The rotating table 12, which is driven by the drive motor 13, rotates the tire T mounted thereon with the central axis of the tire T as the rotational axis. It is to be noted that as already mentioned, there is not necessarily agreement between the central axis of the tire T and the rotational axis of the rotating table 12 in practice.

The drive motor 13, connected to the rotating table 12, rotates the rotating table 12.

The motor control means 14 controls the drive of the drive motor 13 so that the rotating table 12 rotates at a predetermined rotating speed (e.g., 60 r.p.m.).

The rotating angle detecting means 15 detects the rotating angle of the tire T (in fact, the rotating angle of the rotating table 12). The rotating angle detecting means 15 is a rotary encoder, for instance.

It is to be noted that a stepping motor may be used as the drive motor 13 to turn the rotating table 12 in increments of a predetermined angle. In such a case, the rotating angle detecting means 15 may be omitted.

The computing unit 16 is a computer consisting of not-shown hardware, such as a CPU, ROM, RAM, and the like. The CPU, by performing arithmetic processing according to the program stored in the ROM, functions as the image processing means 17, the determining means 19, and the data correction means 20. Note that the storage means 18 is configured by a RAM, which is a rewritable memory.

The image processing means 17 calculates three-dimensional shape data on a sidewall surface by performing an image processing of the image (slit image S) of the contour of the sidewall surface of the tire T captured by the image acquisition means 11. More specifically, coordinates of gravity center of pixels lit up out of a plurality of pixels constituting the slit image are calculated to determine two-dimensional coordinates $(x_{i,k}, z_{i,k})$ of positions (measuring points $P_{i,k}$) of the slit image S. And three-dimensional coordinate data of the measuring points $P_{i,k}$ are determined from the two-dimensional coordinates $(x_{i,k}, z_{i,k})$ and a rotating angle $\theta_i$ of the tire T detected by the rotating angle detecting means 15.

It is to be noted that the index i denotes a circumferential position of the measuring point $P_{i,k}$ (measuring point at rotating angle $\theta_i$) and the index k denotes a radial position (kth measuring point from the rotational center O).

By repeating the operation as described above for every slit image (at every rotating angle $\Delta\theta$), the three-dimensional shape data on the sidewall surface for a full circle of the tire, which consist of the point group data $P_{i,k}$ of cross sections at equal angles passing through the rotational center O, can be calculated. The above-mentioned rotating angle $\Delta\theta$ can be expressed as $\Delta\theta = 2\pi/n$.

Here, if $\theta_i = i\cdot\Delta\theta$ (i = 1 to n) and the number of measuring points $P_{i,k}$ in the $\theta_i$ direction is denoted by $m_i$, then the total of the measuring points $P_{i,k}$ can be written as $N = (m_1 + m_2 + \cdots + m_i + \cdots + m_n)$. It is to be noted that the three-dimensional shape data on the sidewall surface can normally be expressed in the form of cylindrical coordinates, namely, $P_{i,k} = (r_{i,k}, \theta_i, z_{i,k})$.

The storage means 18 stores three-dimensional shape data on the sidewall surface of a standard tire (non-defective tire) which serve as the reference for acceptance or rejection of the appearance of the tire T, three-dimensional coordinate data of measuring points $P_{i,k}$, which are the three-dimensional shape data on the sidewall surface calculated by the image processing means 17, and other data, such as the reference line K, reference equiangular division points $P_i$, and reference equidistant division points $Q_i$, set or calculated by the data correction means 20 to be discussed later.

The determining means 19 determines the acceptance or rejection of the tire T by comparing the three-dimensional shape data on the sidewall surface corrected by the data correction means 20 against the three-dimensional shape data on the sidewall surface of the standard tire having been stored in advance in the storage means 18.

The data correction means 20 includes a reference line setting means 21, an equiangular division point setting means 22, a circumferential length calculating means 23, an equidistant division point setting means 24, a normal vector calculating means 25, an interpolation point vector calculating means 26, an interpolation point data calculating means 27, and an interpolation point moving means 28.

The normal vector calculating means 25 and the interpolation point vector calculating means 26 correspond to the means for realizing the step of setting interpolation points in claim 1.

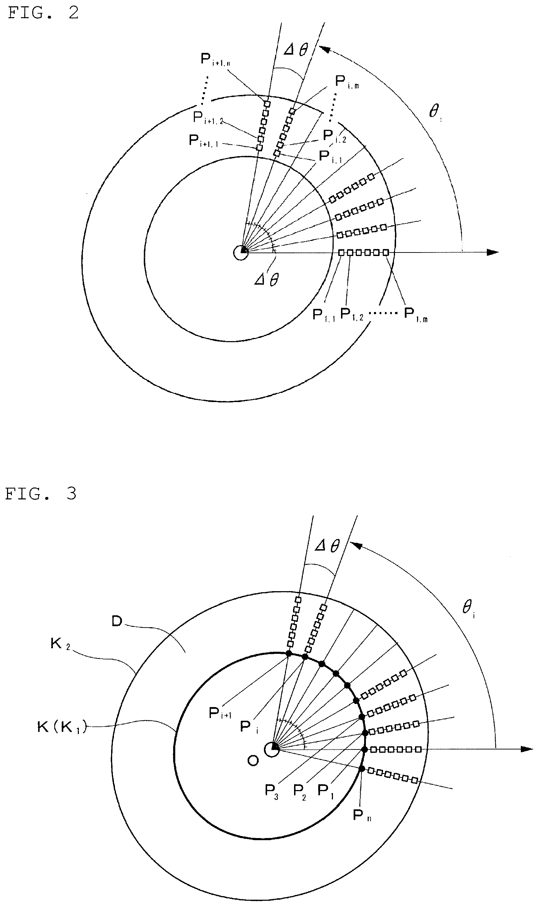

As shown in FIG. 3, the reference line setting means 21 sets a reference line K, which is a closed curve along the shape of data area D, and the equiangular division point setting means 22 sets a plurality of reference equiangular division points $P_i$ (i = 1 to n) on the reference line K.

It is to be noted that the data area D refers to the area consisting of point group data on the equiangular cross sections passing through the rotational center O. That is, the data area D, which is the area enclosed by the rim line $K_1$ and the shoulder line $K_2$, is the area where three-dimensional coordinate data are calculated by the image processing means 17. Also, the closed curve along the shape of data area D refers to a closed curve similar to the rim line $K_1$ or the shoulder line $K_2$.

In the present example, the reference line K is represented by the rim line $K_1$, which is the inner circumference of the data area D.

The reference equiangular division points $P_i$ (i = 1 to n) are the points set on the reference line K which divide it by n equal angles centered about the rotational center O. As is clear from how the reference equiangular division points $P_i$ are set, there are $m_{i,j}$ points of measuring points $P_{i,1}$ to $P_{i,\,mij}$, which constitute the data area D, on the extension of the lines connecting the rotational center O with the reference equiangular division points $P_i$ (see FIG. 2).

The circumferential length calculating means 23 calculates the total length of the reference line (hereinafter referred to as circumferential length 1), which is the full circle length of the reference line K, from the distance $\Delta P_i$ between the adjacent reference equiangular division points $P_i$ and $P_{i+1}$. That is, the circumferential length $1 = \Delta P_1 + \Delta P_2 + + \Delta P_n$ (where $\Delta P_n$ is the distance between $P_n$ and $P_1$).

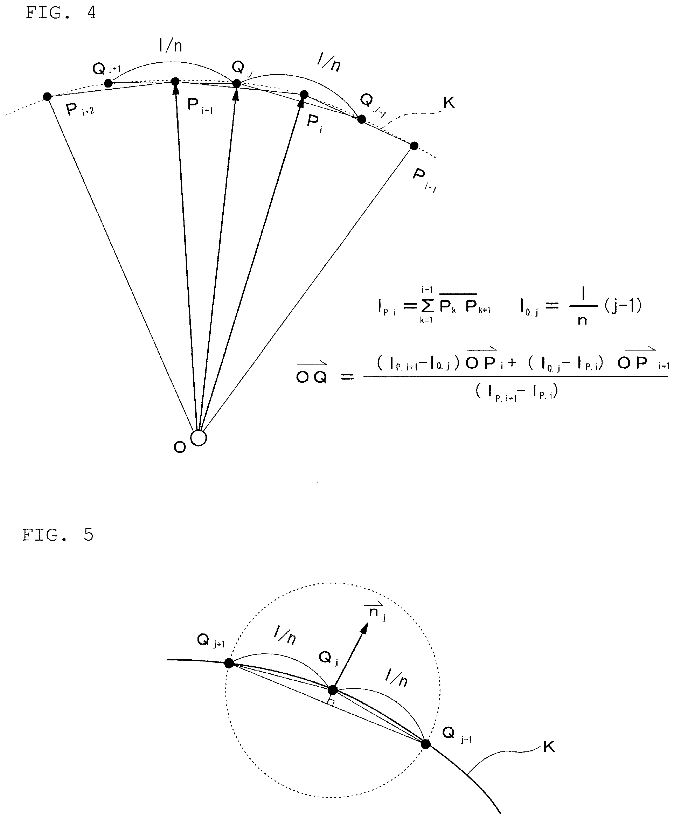

The equidistant division point setting means 24, as shown in FIG. 4, sets a plurality of reference equidistant division point $Q_j$ (j =1 to n), which divide the reference line K into equal lengths, on the reference line K, using the circumferential length I.

More specifically, the positions of the reference equidistant division points $Q_j$ are calculated from the length $l_{P,i}$ of the polygonal lines $P_1 P_2 \cdots P_i$ and the length $l_{Q,j}$ of the polygonal lines $Q_1 Q_2 \cdots Q_j$. Since the length of the segment $Q_k Q_{k+1}$ is l/n, the length of the polygonal lines $Q_1 Q_2 \cdots Q_j$ is $l_{Q,j} = (j-1) \cdot (l/n)$. Hence, the positions of the reference equidistant division points $Q_j$ can be calculated as the points which internally divide the two reference equiangular division points $P_i$ and $P_{i+1}$ adjacent to $Q_j$ at $(l_{Q,j} - l_{P,i}) : (l_{p,i+1} - l_{Q,j})$. Normally, since the distance $\Delta P_i$ between the reference equiangular division points $P_i$ and $P_{i+1}$ is much shorter than the length of the reference line K, the reference equidistant division points $Q_j$ can be assumed to be the points on the reference line K.

The normal vector calculating means 25, as shown in FIG. 5, calculates the unit normal vector $n_j$ at the reference equidistant division point $Q_j$. In this example, the unit normal vector $n_j$ is the unit vector passing through the reference

equidistant division point $Q_j$ and perpendicular to the segment connecting the two reference equidistant division points $Q_{j-1}$ and $Q_{j+1}$ adjacent to the reference equidistant division point $Q_j$.

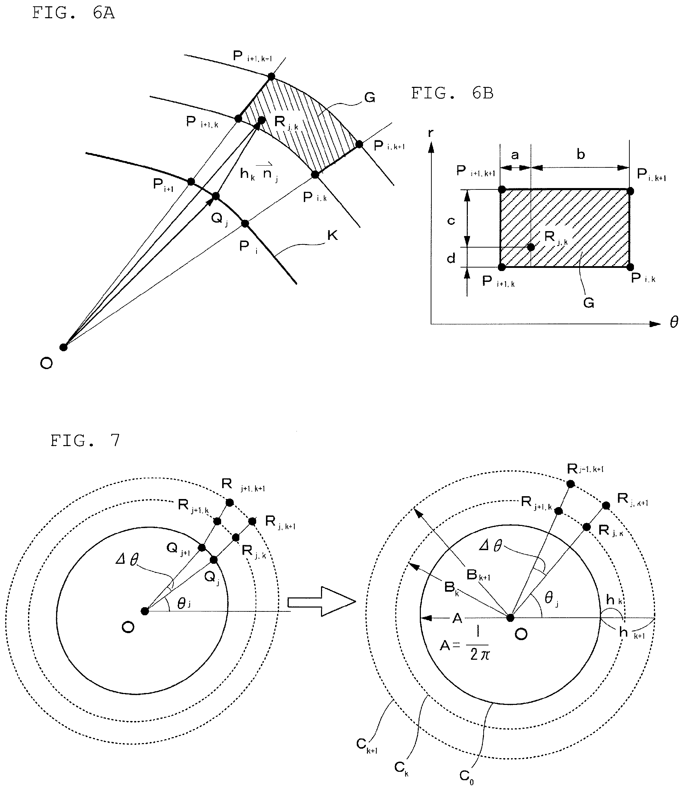

The interpolation point vector calculating means 26, as shown in FIG. 6A, calculates the interpolation point vector $OR_{j,k}$ having the start point at the rotational center from the sum (vector sum) of the division point vector $OQ_j$, which has the start point at the rotational center O and the end point at the reference equidistant division point $Q_j$, and the direction vector $Q_jR_{j,k}$, which has the start point at the reference equidistant division point $Q_j$, faces the direction of the unit normal vector $n_j$, and is of a magnitude equal to the magnitude of the unit normal vector multiplied by the preset distance $h_k$.

The distance $h_k$ is of a value independent of the rotating angle $\theta_i$. In order to make a maximum use of the three-dimensional data, it may, for example, be $h_k = \Delta p_{min} \cdot k$ using the minimum value $\Delta p_{min}$ of the interval between measuring points $P_{i,k}$ in the radial direction. Or it may be $h_k = \Delta r_{min} \cdot k$ using the resolution $\Delta r_{min}$ in the tire radial direction necessary to achieve accuracy in the acceptance or rejection of the tire.

As already mentioned, there are $m_i$ points of measuring points $P_{i,1}$ to $P_{i, mij}$ on the extension of the lines connecting the rotational center O with the reference equiangular division points $P_i$. Therefore, by setting i,k as appropriate, an area G defined by the measuring points $P_{i,k}$, $P_{i,k+1}$, $P_{i+1,k}$, $P_{i+1,k+1}$ surrounding the interpolation point $R_{j,k}$, which is the end point of the interpolation vector $OR_{j,k}$, can be set.

The interpolation point data calculating means 27, as shown in FIG. 6B, calculates the depth-direction data $Z_{i,k}$ of the interpolation point $R_{j,k}$ using the depth-direction data $z_{i,k}$, $z_{i,k+1}$, $z_{i+1,k}$, $z_{i+1,k+1}$ of the measuring points $P_{i,k}$, $P_{i,k+1}$, $P_{i+1,k}$, $P_{i+1,k+1}$ calculated by the image processing means 17.

More specifically, the area G enclosed by the arc passing through the measuring points $P_{i,k}$ and $P_{i+1,k}$, the arc passing through the measuring points $P_{i,k+1}$ and $P_{i+1,k+1}$, the straight line passing through the measuring points $P_{i,k}$ and $P_{i,k+1}$, and the straight line passing through the measuring points $P_{i+1,k}$ and $P_{i+1,k+1}$ is assumed to be a rectangle having the vertical sides (r) equal to the distance between $P_{i,k}$ and $P_{i,k+1}$ and the horizontal sides ($\theta$) equal to the distance between $P_{i,k}$ and $P_{i+1,k}$ by use of the r-$\theta$ coordinate system (polar coordinates) . And the depth-direction data $Z_{j,k}$ of the interpolation point $R_{j, k}$ is calculated by a bilinear interpolation. That is, $Z_{j,k}$ is calculated using the following equation on the assumption that in the r-$\theta$ coordinate system (polar coordinates), the $\theta$ coordinates of $R_{j,k}$ are equal to the $\theta$ coordinates that internally divide the distance between $P_{i,k}$ and $P_{i+1,k}$ at a : b (a + b = 1) and the r coordinates are equal to the r coordinates that internally divide the distance between $P_{i,k}$ and $P_{i,k+1}$ at c : d (c + d = 1) .

[Equation 1]

$$Z_{j,k} = b \cdot c \cdot z_{i,k} + a \cdot c \cdot z_{i+1,k} + b \cdot d \cdot z_{i,k+1} + a \cdot d \cdot z_{i+1,k+1}$$

It should be noted that the depth-direction data $Z_{j,k}$ of the interpolation point $R_{j,k}$ may be calculated using another interpolation method, such as bicubic method, in the place of the bilinear method. Thus, setting the interpolation point $R_{j,k}$ using the procedure as described above will achieve an accurate interpolation of the three-dimensional shape data of the data area. And this will improve the interpolation accuracy of the shape data on the surface of an annular rotating body.

The interpolation point moving means 28, as shown in FIG. 7, allocates the interpolation points $R_{j,k}$ on a circle $C_k$, which is concentric with the circle $C_0$ centered about the rotational center O and having the circumferential length 1.

The radius of the circle $C_0$ having the circumferential length 1 is A = 1/2 $\pi$. Also, the interpolation points $R_{j,k}$ are the points displaced radially outward by $h_k$ from the reference equidistant division points $Q_j$. Hence, expressed in cylindrical coordinates, the coordinates of the interpolation point $R_{j,k}$ are $R_{j,k} = (B_k, \theta_j, Z_{j,k})$. Here $B_k$, the radius of the circle $C_k$ to which the interpolation point $R_{j,k}$ has been moved, is $B_k = A + h_k$. Also, $\theta_j$, which is the rotating angle of the interpolation point $R_{j,k}$ about the rotational center O, is $\theta_j = j \cdot (2\pi/n)$ where j = 1 to n.

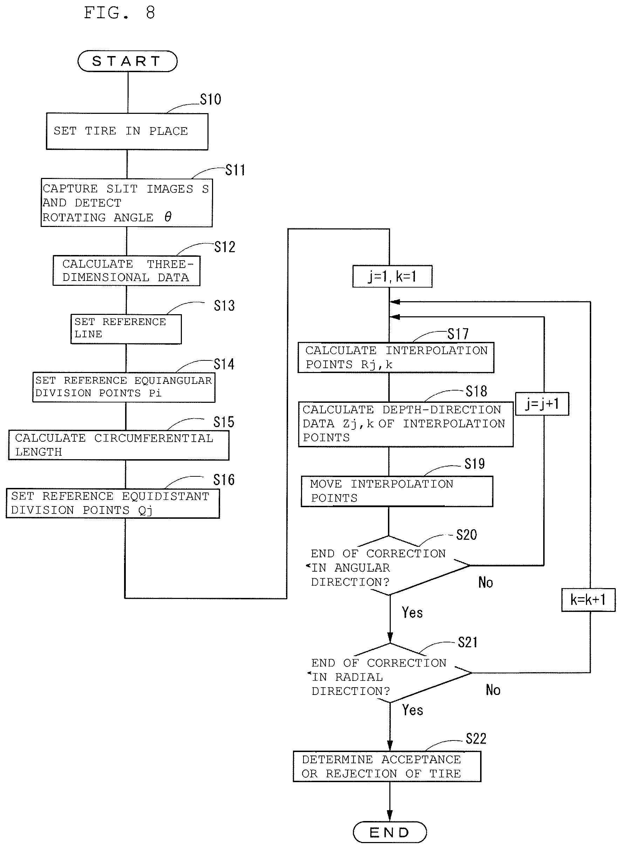

Now, a description is given of the operation of a tire appearance inspection apparatus according to the present invention with reference to the flowchart of FIG. 8.

First the tire T is set in place (step S10). More specifically, the tire T is mounted on the rotating table 12 and rotated to the initial position ($\theta_i$ = 0 rad) with the drive motor 13 driving the rotating table 12.

Next, while the tire T is rotated, the images (slit images S) of the sidewall surface of the tire T are captured by the image acquisition means 11. At the same time, the rotating angle $\theta$ of the tire T is detected by the rotating angle detecting means 15 (step S11). Then the three-dimensional shape data on the sidewall surface are calculated by the image processing means 17 from the captured slit images S and the rotating angle $\theta$ of the tire T (step S12) .

Next, the calculated three-dimensional shape data are corrected using the data correction means 20.

More specifically, as shown in FIG. 3, the reference line K along the shape of the data area D is set using the reference line setting means 21 (step S13). Then the reference equiangular division points $P_i$ (i = 1 to n) are set on the reference line K by the equiangular division point setting means 22 (step S14). The reference equiangular division points

$P_i$ are the points that divide the reference line K into n divisions of equal angles about the rotational center O.

Next, the circumferential length 1 of the reference line K is calculated by the circumferential length calculating means 23, using the distance $\Delta P_i$ between the reference equiangular division points $P_i$ and $P_{i+1}$ (step S15). Then the reference equidistant division points $Q_j$ (j = 1 to n) are set on the reference line K, using the calculated circumferential length 1 (step S16). The reference equidistant division points $Q_j$ (j = 1 to n) are the points that divide the reference line K into equal lengths.

Next, the interpolation point $R_{j,k}$ for correction of the three-dimensional data is calculated by the normal vector calculating means 25 and the interpolation point vector calculating means 26, using the previously set reference equidistant division point $Q_j$ (step S17).

The interpolation points $R_{j,k}$ are each the point within the data area D which is obtained by moving the reference equidistant division point $Q_j$ by the distance $h_k$ in the tire radial direction. More specifically, the interpolation points $R_{j,k}$ are each the position at the end point of the interpolation point vector $OR_{j,k}$, which can be derived as the vector sum of the division point vector $OR_{j,k}$ that has the start point at the rotational center O and the end point at the reference equidistant division point $Q_j$ and the direction vector $Q_jR_{j,k}$ that has the start point at the reference equidistant division point $Q_j$, faces the direction of the unit normal vector $n_j$, and is of a magnitude equal to the distance $h_k$.

Next, the depth-direction data $Z_{j,k}$ of the interpolation point $R_{j,k}$ are calculated by the interpolation point data calculating means 27 from the depth-direction data of the measuring points $P_{i,k}$, $P_{i,k+1}$, $P_{i+1,k}$, $P_{i+1,k+1}$ surrounding the interpolation point $R_{j,k}$ (step S18).

Next, the interpolation points $R_{j,k}$ are moved onto a circle concentric with the circle $C_0$ centered about the rotational center O and having the circumferential length 1 by the interpolation point moving means 28 (step S19).

As is indicated in step S20 and step S21, all the interpolation points $R_{j,k}$ can be allocated on the circle $C_k$ centered about the rotational center O by repeating the operations of step S17 and step S18 in the angular direction and the radial direction, respectively.

Finally, the acceptance or rejection of the tire T is determined by comparing the corrected three-dimensional shape data on the sidewall surface against the three-dimensional shape data on the sidewall surface of the standard tire (step S22).

In the foregoing specification, the invention has been described with reference to specific embodiments thereof. However, the technical scope of this invention should not be considered as limited to those embodiments. It will be evident to those skilled in the art that various modifications and changes may be made thereto without departing from the scope of the invention, which is defined in the appended claims.

For example, in the foregoing embodiments, the rim line, which is the inner circumference of the data area D, is employed as the reference line K. However, the shoulder line, which is the outer circumference of the data area D, may be employed as the reference line K. In such a case, it goes without saying that the unit normal vector $n_j$ must face radially inward of the tire.

Also, in the foregoing embodiments, the number n' of the reference equidistant division points Q is the same as the number n of the reference equiangular division points P. However, it may be n' < n or conversely n' > n. In this case, the reference equidistant division point $Q_j$ is not the internally dividing point of the adjacent reference equiangular division points $P_i$ and $P_{i+1}$. But the coordinates of the reference equidistant division point $Q_j$ can be calculated using the length $l_{P,i}$ of the polygonal lines $P_1 P_2 \cdots\cdots P_i$ and the length $l_{q,j}$ of the polygonal lines $Q_1 Q_2. \cdots Q_j$, namely, $l_{q,j} = (j-1) \cdot (l/n')$, in the same way as in the foregoing embodiments. Also, the number $m_j'$ of the interpolation points $R_{j,k}$ at the rotating angle $\theta_i$ may be smaller than $m_j$. However, if the three-dimensional shape data detected by the light-section method are to be put to an effective use, it is preferable that n' $\geqq$ n and $m_j' \geqq m_j$ as in the present embodiment.

Also, the foregoing embodiments have been described in regard to the method for correcting the three-dimensional shape data on a sidewall region of a tire derived by a light-section method. However, the surface shape data may be that of a part of the annular rotating body, such as a part of the sidewall region. The distortion of a tire itself conceivable from the materials and structure thereof is limited; there is no such distortion as may "change the circumferential length". Therefore, the surface shape data on the sidewall region (or the surface shape data on the tread region) of the tire measured at equal angles by applying the above-described method to the tire may be converted into the data divided equidistantly. And the equidistantly divided data may be reallocated on a perfect circle in such a manner that there is no change in circumferential length. Then the shape data on the surface of the tire can be corrected with excellent accuracy.

Moreover, the surface shape data on the sidewall region or the tread region of a tire can be detected accurately without fitting the tire on the rim and filling air into it. In this manner, the measuring time can be shortened markedly.

Also, there is no need to use a high-precision centering mechanism, which will simplify the equipment. Moreover, the data to be used may be the surface shape data on the tread region. Further, the surface shape data may be that obtained by methods such as stereo camera or moire topography, other than the light-section method. Also, now that the annular rotating body is a tire, a tire appearance inspection apparatus capable of measuring tire surface shape data at high speed and low cost can be provided.

Furthermore, the foregoing embodiments are based on the assumption that the annular rotating body, which is the object to be inspected, is a tire. However, the invention is not limited thereto. The invention is defined in the appended claims.

Description of Reference Numerals

| | |
|---|---|
| 10 | tire appearance inspection apparatus |
| 11 | image acquisition means |
| 11A | light casting means |
| 11B | image capturing means |
| 12 | rotating table |
| 13 | drive motor |
| 14 | motor control means |
| 15 | rotating angle detecting means |
| 16 | computing unit |
| 17 | image processing means |
| 18 | storage means |
| 19 | determining means |
| 20 | data correction means |
| 21 | reference line setting means |
| 22 | equiangular division point setting means |
| 23 | circumferential length calculating means |
| 24 | equidistant division point setting means |
| 25 | normal vector calculating means |
| 26 | interpolation point vector calculating means |
| 27 | interpolation point data calculating means |
| 28 | interpolation point moving means |
| T | tire |

**Claims**

1. A method for correcting three-dimensional shape data on a surface of an annular rotating body (T), the method comprising:

   detecting three-dimensional shape data on a surface of an annular rotating body (T) using images of the surface of the annular rotating body (T) which are captured while the annular rotating body (T) and an image capturing means (11B) are rotated relatively with each other;

   setting a reference line (K), which is a closed curve along the surface to be detected of the annular rotating body (T), within a plane perpendicular to a central axis of the annular rotating body (T) in the detected three-dimensional shape data;

   setting a plurality of reference equiangular division points (P) on the reference line (K) by dividing the reference line (K) by equal angles centered about a rotational center (O) of the rotation;

   calculating a circumferential length (1) of the reference line (K), which is a length of a full circle of the reference line (K), from a distance between adjacent reference equiangular division points (P);

   setting, on the reference line (K), a plurality of reference equidistant division points (Q), which divide the reference line (K) into equal lengths, using the circumferential length (1);

   setting interpolation points (R) for correction of data on the surface to be detected of the annular rotating body (T) at positions a preset distance (h) apart in a radial direction of the annular rotating body (T) from the reference equidistant division points (Q);

   calculating three-dimensional shape data at the interpolation points (R), using the three-dimensional shape data; and

   moving the interpolation points (R) onto a perfect circle $(C_k)$ which is concentric with a circle $(C_0)$ centered about the rotational center (O) and having a circumferential length same as the circumferential length (1) of the reference line (K), using the circumferential length (1) of the reference line (K) and the preset distance (h).

2. The method for correcting surface shape data of an annular rotating body (T) according to claim 1, wherein in the setting interpolation points (R), unit normal vectors at the reference equidistant division points (Q) are calculated, then a vector sum of a division point vector, which has a start point at the rotational center (O) and an end point at the reference equidistant division point (Q), and a direction vector, which has a start point at the reference equidistant division point (Q), faces a direction of the unit normal vector, and is of a magnitude equal to a magnitude of the unit normal vector multiplied by the predetermined distance (h), is obtained as each of interpolation point vectors, and an end point of the interpolation point vector when a start point of the interpolation point vector is the rotational center (O) is used as each of the interpolation points (R), and
in the calculating three-dimensional shape data at the interpolation points (R), depth-direction data of the interpolation points (R) are calculated using the three-dimensional shape data.

3. The method for correcting surface shape data of an annular rotating body (T) according to claim 1 or claim 2, wherein the annular rotating body (T) comprises a tire (T), and the three-dimensional shape data comprise surface shape data on a sidewall region or a tread region of the tire (T) determined by a light-section method.

4. An apparatus (10) for inspecting an appearance of an annular rotating body (T) comprising:

an image acquisition means (11) having a light casting means (11A) configured for casting slit light to a surface to be inspected of the annular rotating body (T) and an image capturing means (11B) configured for imaging a portion illuminated by the slit light;
a rotating means (12, 13, 14, 15) configured for rotating the annular rotating body (T) and the image acquisition means (11) relatively to each other about a rotation axis;
an image processing means (17) configured for calculating three-dimensional data on the surface of the annular rotating body (T) by performing an image processing of the images of the surface of the annular rotating body (T) captured by the image acquisition means (11); and
a data correction means (20) configured for correcting the three-dimensional data,
wherein the data correction means (20) further comprises:

a reference line setting means (21) configured for setting a reference line (K), which is a closed curve along the surface to be detected of the annular rotating body (T), within a plane perpendicular to a central axis of the annular rotating body (T);
an equiangular division point setting means (22) configured for setting a plurality of reference equiangular division points (P) on the reference line (K) by dividing the reference line (K) by equal angles centered about a rotational center (O) of the relative rotation;
a circumferential length calculating means (23) configured for calculating a circumferential length (1) of the reference line (K), which is a full circle length of the reference line (K), from a distance between adjacent reference equiangular division points (P);
an equidistant division point setting means (24) configured for setting, on the reference line (K), a plurality of reference equidistant division points (Q), which divide the reference line (K) into equal lengths, using the circumferential length (l);
a normal vector calculating means (25) configured for calculating unit normal vectors at the reference equidistant division points (Q), each unit normal vector being perpendicular to a segment connecting the two reference equidistant division points (Q) which are adjacent to the reference equidistant division point (Q) at which the unit normal vector is calculated;
an interpolation point vector calculating means (26) configured for calculating interpolation point vectors for the reference equidistant division points (Q) having a start point at the rotational center (O), from a sum of a division point vector, which has a start point at the rotational center (O) and an end point at the reference equidistant division point (Q) for which the interpolation point vector is calculated, and a direction vector, which has a start point at the reference equidistant division point (Q), faces a direction of the unit normal vector at the reference equidistant division point (Q) for which the interpolation point vector is calculated, and is of a magnitude equal to a magnitude of the unit normal vector multiplied by a predetermined distance (h);
an interpolation point data calculating means (27) configured for calculating depth-direction data of interpolation points (R), which are each an end point of the interpolation point vector, using the three-dimensional shape data, and
an interpolation point moving means (28) configured for moving the interpolation points (R) onto a perfect circle ($C_k$) which is concentric with a circle ($C_0$) centered about the rotational center (O) and having the same circumferential length as the circumferential length (l) of the reference line (K), using the circumferential length (l) of the reference line (K), and the predetermined distance (h).

5. The apparatus (10) for inspecting an appearance of an annular rotating body (T) according to claim 4, wherein the annular rotating body (T) comprises a tire (T).


**Patentansprüche**

1. Verfahren zum Korrigieren dreidimensionaler Formdaten über eine Oberfläche eines ringförmigen sich drehenden Körpers (T), wobei das Verfahren Folgendes umfasst:

   Erfassen dreidimensionaler Formdaten über eine Oberfläche eines ringförmigen sich drehenden Körpers (T) unter Verwendung von Bildern der Oberfläche des ringförmigen sich drehenden Körpers (T), die aufgenommen werden, während der ringförmige sich drehende Körper (T) und ein Bildaufnahmemittel (11B) im Verhältnis miteinander gedreht werden,
   Festsetzen einer Bezugslinie (K), die eine geschlossene Kurve entlang der zu erfassenden Oberfläche des ringförmigen sich drehenden Körpers (T) ist, innerhalb einer Ebene, senkrecht zu einer Mittelachse des ringförmigen sich drehenden Körpers (T), in den erfassten dreidimensionalen Formdaten,
   Festsetzen einer Vielzahl von winkelgleichen Bezugsteilungspunkten (P) auf der Bezugslinie (K) durch Teilen der Bezugslinie (K) durch gleiche Winkel, die um einen Drehungsmittelpunkt (O) der Drehung zentriert sind,
   Berechnen einer Umfangslänge (l) der Bezugslinie (K), die eine Länge eines vollen Kreises der Bezugslinie (K) ist, aus einer Entfernung zwischen benachbarten winkelgleichen Bezugsteilungspunkten (P),
   Festsetzen, auf der Bezugslinie (K), einer Vielzahl von abstandsgleichen Bezugsteilungspunkten (Q), welche die Bezugslinie (K) in gleiche Längen teilen, unter Verwendung der Umfangslänge (l),
   Festsetzen von Interpolationspunkten (R) zur Korrektur von Daten über die zu erfassende Oberfläche des ringförmigen sich drehenden Körpers (T) an Positionen, die um eine vorgegebene Entfernung (h) in einer Radialrichtung des ringförmigen sich drehenden Körpers (T) von den abstandsgleichen Bezugsteilungspunkten (Q) entfernt sind,
   Berechnen dreidimensionaler Formdaten an den Interpolationspunkten (R), unter Verwendung der dreidimensionalen Formdaten und
   Bewegen der Interpolationspunkte (R) auf einen perfekten Kreis (Ck), der konzentrisch mit einem Kreis (Co) ist, der um den Drehungsmittelpunkt (O) zentriert ist und eine Umfangslänge aufweist, welche dieselbe ist wie die Umfangslänge (l) der Bezugslinie (K), unter Verwendung der Umfangslänge (l) der Bezugslinie (K) und der vorgegebenen Entfernung (h).

2. Verfahren zum Korrigieren dreidimensionaler Formdaten eines ringförmigen sich drehenden Körpers (T) nach Anspruch 1, wobei
   beim Festsetzen von Interpolationspunkten (R) Einheitsnormalenvektoren an den abstandsgleichen Bezugsteilungspunkten (Q) berechnet werden, danach eine Vektorsumme eines Teilungspunktvektors, der einen Ausgangspunkt an dem Drehungsmittelpunkt (O) und einen Endpunkt an dem abstandsgleichen Bezugsteilungspunkt (Q) hat, und eines Richtungsvektors, der einen Ausgangspunkt an dem abstandsgleichen Bezugsteilungspunkt (Q) hat, sich zu einer Richtung des Einheitsnormalenvektors wendet und eine Größe, gleich einer Größe des Einheitsnormalenvektors, multipliziert mit der vorgegebenen Entfernung (h), aufweist, als jeder von Interpolationspunktvektoren erhalten wird und ein Endpunkt des Interpolationspunktvektors, wenn ein Ausgangspunkt des Interpolationspunktvektors der Drehungsmittelpunkt (O) ist, als jeder der Interpolationspunkte (R) verwendet wird, und
   beim Berechnen dreidimensionaler Formdaten an den Interpolationspunkten (R) Tiefenrichtungsdaten der Interpolationspunkte (R) unter Verwendung der dreidimensionalen Formdaten berechnet werden.

3. Verfahren zum Korrigieren dreidimensionaler Formdaten eines ringförmigen sich drehenden Körpers (T) nach Anspruch 1 oder Anspruch 2, wobei der ringförmige sich drehende Körper (T) einen Reifen (T) umfasst und die dreidimensionalen Formdaten Oberflächenformdaten über einen Seitenwandbereich oder einen Laufflächenbereich des Reifens (T), bestimmt durch ein Lichtschnittverfahren, umfassen.

4. Vorrichtung (10) zum Untersuchen eines Aussehens eines ringförmigen sich drehenden Körpers (T), die Folgendes umfasst:

   ein Bilderfassungsmittel (11), das ein Lichtwurfmittel (11A), das konfiguriert ist zum Werfen von Spaltlicht auf eine zu untersuchende Oberfläche des ringförmigen sich drehenden Körpers (T), und ein Bildaufnahmemittel (11B), das konfiguriert ist zum Abbilden eines durch das Spaltlicht beleuchteten Abschnitts,
ein Drehungsmittel (12, 13, 14, 15), das konfiguriert ist zum Drehen des ringförmigen sich drehenden Körpers (T) und des Bilderfassungsmittels (11) im Verhältnis zueinander um eine Drehungsachse,
ein Bildverarbeitungsmittel (17), das konfiguriert ist zum Berechnen dreidimensionaler Daten über die Oberfläche des ringförmigen sich drehenden Körpers (T) durch Durchführen einer Bildverarbeitung der durch das Bilderfassungsmittel (11) aufgenommenen Bilder der Oberfläche des ringförmigen sich drehenden Körpers (T), und
ein Datenkorrekturmittel (20), das konfiguriert ist zum Korrigieren der dreidimensionalen Daten,
wobei das Datenkorrekturmittel (20) ferner Folgendes umfasst:

ein Bezugslinien-Festsetzungsmittel (21), das konfiguriert ist zum Festsetzen einer Bezugslinie (K), die eine geschlossene Kurve entlang der zu erfassenden Oberfläche des ringförmigen sich drehenden Körpers (T) ist, innerhalb einer Ebene, senkrecht zu einer Mittelachse des ringförmigen sich drehenden Körpers (T),
ein Festsetzungsmittel (22) für winkelgleiche Teilungspunkte, das konfiguriert ist zum Festsetzen einer Vielzahl von winkelgleichen Bezugsteilungspunkten (P) auf der Bezugslinie (K) durch Teilen der Bezugslinie (K) durch gleiche Winkel, die um einen Drehungsmittelpunkt (O) der Drehung zentriert sind,
ein Umfangslängen-Berechnungsmittel (23), das konfiguriert ist zum Berechnen einer Umfangslänge (l) der Bezugslinie (K), die eine Länge eines vollen Kreises der Bezugslinie (K) ist, aus einer Entfernung zwischen benachbarten winkelgleichen Bezugsteilungspunkten (P),
ein Festsetzungsmittel (24) für abstandsgleiche Teilungspunkte, das konfiguriert ist zum Festsetzen, auf der Bezugslinie (K), einer Vielzahl von abstandsgleichen Bezugsteilungspunkten (Q), welche die Bezugslinie (K) in gleiche Längen teilen, unter Verwendung der Umfangslänge (l),
ein Normalenvektor-Berechnungsmittel (25), das konfiguriert ist zum Berechnen von Einheitsnormalenvektoren an den abstandsgleichen Bezugsteilungspunkten (Q), wobei jeder Einheitsnormalenvektor senkrecht zu einer Strecke ist, welche die zwei abstandsgleichen Bezugsteilungspunkte (Q) verbindet, die dem abstandsgleichen Bezugsteilungspunkt (Q) benachbart sind, an dem der Einheitsnormalenvektor berechnet wird,
ein Interpolationspunktvektor-Berechnungsmittel (26), das konfiguriert ist zum Berechnen von Interpolationspunktvektoren für die abstandsgleichen Bezugsteilungspunkte (Q), die einen Ausgangspunkt an dem Drehungsmittelpunkt (O) haben, aus einer Summe eines Teilungspunktvektors, der einen Ausgangspunkt an dem Drehungsmittelpunkt (O) und einen Endpunkt an dem abstandsgleichen Bezugsteilungspunkt (Q), für den der Einheitsnormalenvektor berechnet wird, hat, und eines Richtungsvektors, der einen Ausgangspunkt an dem abstandsgleichen Bezugsteilungspunkt (Q) hat, sich zu einer Richtung des Einheitsnormalenvektors an dem abstandsgleichen Bezugsteilungspunkt (Q), für den der Einheitsnormalenvektor berechnet wird, wendet und eine Größe, gleich einer Größe des Einheitsnormalenvektors, multipliziert mit der vorgegebenen Entfernung (h), aufweist,
ein Interpolationspunktdaten-Berechnungsmittel (27), das konfiguriert ist zum Berechnen von Tiefenrichtungsdaten von Interpolationspunkten (R), die jeweils ein Endpunkt des Interpolationspunktvektors sind, unter Verwendung der dreidimensionalen Formdaten, und
ein Interpolationspunkt-Bewegungsmittel (28), das konfiguriert ist zum Bewegen der Interpolationspunkte (R) auf einen perfekten Kreis (Ck), der konzentrisch mit einem Kreis (Co) ist, der um den Drehungsmittelpunkt (O) zentriert ist und die gleiche Umfangslänge wie die Umfangslänge (l) der Bezugslinie (K) aufweist, unter Verwendung der Umfangslänge (l) der Bezugslinie (K) und der vorgegebenen Entfernung (h).

5. Vorrichtung (10) zum Untersuchen eines Aussehens eines ringförmigen sich drehenden Körpers (T) nach Anspruch 4, wobei der ringförmige sich drehende Körper (T) einen Reifen (T) umfasst.

**Revendications**

1. Procédé pour corriger des données de forme tridimensionnelles sur une surface d'un corps rotatif annulaire (T), le procédé comprenant :

la détection de données de forme tridimensionnelles sur une surface d'un corps rotatif annulaire (T) en utilisant des images de la surface du corps rotatif annulaire (T) qui sont capturées tandis que le corps rotatif annulaire (T) et un moyen de capture d'image (11B) sont respectivement entraînés en rotation l'un avec l'autre ;
la définition d'une ligne de référence (K) qui est une courbe fermée le long de la surface qui doit être détectée du corps rotatif annulaire (T), à l'intérieur d'un plan qui est perpendiculaire à un axe central du corps rotatif annulaire (T) au sein des données de forme tridimensionnelles détectées ;

la définition d'une pluralité de points de division équiangulaire de référence (P) sur la ligne de référence (K) en divisant la ligne de référence (K) au moyen d'angles égaux qui sont centrés autour d'un centre de rotation (O) de la rotation ;

le calcul d'une longueur circonférentielle (1) de la ligne de référence (K), qui est une longueur d'un cercle complet de la ligne de référence (K), à partir d'une distance entre des points de division équiangulaire de référence adjacents (P) ;

la définition, sur la ligne de référence (K), d'une pluralité de points de division équidistante de référence (Q) qui divisent la ligne de référence (K) en des longueurs égales, en utilisant la longueur circonférentielle (1) ;

la définition de points d'interpolation (R) pour la correction de données sur la surface qui doit être détectée du corps rotatif annulaire (T) au niveau de positions qui sont espacées d'une distance prédéfinie (h) dans une direction radiale du corps rotatif annulaire (T) vis-à-vis des points de division équidistante de référence (Q) ;

le calcul de données de forme tridimensionnelles au niveau des points d'interpolation (R), en utilisant les données de forme tridimensionnelles ; et

le déplacement des points d'interpolation (R) sur un cercle parfait ($C_K$), lequel cercle parfait est concentrique à un cercle (Co) qui est centré autour du centre de rotation (O) et qui présente une longueur circonférentielle qui est la même que la longueur circonférentielle (1) de la ligne de référence (K), en utilisant la longueur circonférentielle (1) de la ligne de référence (K) et la distance prédéfinie (h).

2. Procédé pour corriger des données de forme de surface d'un corps rotatif annulaire (T) selon la revendication 1, dans lequel :

au niveau de la définition des points d'interpolation (R), des vecteurs normaux unitaires au niveau des points de division équidistante de référence (Q) sont calculés, puis une somme vectorielle d'un vecteur de point de division qui présente un point de début au niveau du centre de rotation (O) et un point de fin au niveau du point de division équidistante de référence (Q), et d'un vecteur de direction qui présente un point de début au niveau du point de division équidistante de référence (Q), fait face à une direction du vecteur normal unitaire et est d'une amplitude qui est égale à une amplitude du vecteur normal unitaire multipliée par la distance prédéterminée (h), est obtenue en tant que chacun de vecteurs de point d'interpolation, et un point de fin du vecteur de point d'interpolation lorsqu'un point de début du vecteur de point d'interpolation est le centre de rotation (O) est utilisé en tant que chacun des points d'interpolation (R) ; et

au niveau du calcul des données de forme tridimensionnelles au niveau des points d'interpolation (R), des données de direction de profondeur des points d'interpolation (R) sont calculées en utilisant les données de forme tridimensionnelles.

3. Procédé pour corriger des données de forme de surface d'un corps rotatif annulaire (T) selon la revendication 1 ou la revendication 2, dans lequel le corps rotatif annulaire (T) comprend un pneumatique (T), et les données de forme tridimensionnelles comprennent des données de forme de surface sur une région de paroi latérale ou sur une région de bande de roulement du pneumatique (T) qui est déterminée au moyen d'un procédé par coupe optique.

4. Appareil (10) pour inspecter un aspect d'un corps rotatif annulaire (T), comprenant :

un moyen d'acquisition d'image (11) qui comporte un moyen de projection de lumière (11A) qui est configuré de manière à ce qu'il projette une lumière en forme de fente sur une surface qui doit être inspectée du corps rotatif annulaire (T) et un moyen de capture d'image (11B) qui est configuré de manière à ce qu'il forme une image d'une partie qui est éclairée au moyen de la lumière en forme de fente ;

un moyen d'entraînement en rotation (12, 13, 14, 15) qui est configuré pour entraîner en rotation le corps rotatif annulaire (T) et le moyen d'acquisition d'image (11) de façon relative l'un par rapport à l'autre autour d'un axe de rotation ;

un moyen de traitement d'image (17) qui est configuré pour calculer des données tridimensionnelles sur la surface du corps rotatif annulaire (T) en réalisant un traitement d'image des images de la surface du corps rotatif annulaire (T) qui sont capturées par le moyen d'acquisition d'image (11) ; et

un moyen de correction de données (20) qui est configuré pour corriger les données tridimensionnelles ;

dans lequel le moyen de correction de données (20) comprend en outre :

un moyen de définition de ligne de référence (21) qui est configuré pour définir une ligne de référence (K) qui est une courbe fermée le long de la surface qui doit être détectée du corps rotatif annulaire (T), à l'intérieur d'un plan qui est perpendiculaire à un axe central du corps rotatif annulaire (T) ;

un moyen de définition de points de division équiangulaire (22) qui est configuré pour définir une pluralité de points de division équiangulaire de référence (P) sur la ligne de référence (K) en divisant la ligne de référence (K) au moyen d'angles égaux qui sont centrés autour d'un centre de rotation (O) de la rotation relative ;

un moyen de calcul de longueur circonférentielle (23) qui est configuré pour calculer une longueur circonférentielle (1) de la ligne de référence (K), qui est une longueur de cercle complet de la ligne de référence (K), à partir d'une distance entre des points de division équiangulaire de référence adjacents (P) ;

un moyen de définition de points de division équidistante (24) qui est configuré pour définir, sur la ligne de référence (K), une pluralité de points de division équidistante de référence (Q) qui divisent la ligne de référence (K) en des longueurs égales, en utilisant la longueur circonférentielle (1) ;

un moyen de calcul de vecteur normal (25) qui est configuré pour calculer des vecteurs normaux unitaires au niveau des points de division équidistante de référence (Q), chaque vecteur normal unitaire étant perpendiculaire à un segment qui relie les deux points de division équidistante de référence (Q) qui sont adjacents au point de division équidistante de référence (Q) au niveau duquel le vecteur normal unitaire est calculé ;

un moyen de calcul de vecteur de point d'interpolation (26) qui est configuré pour calculer des vecteurs de point d'interpolation pour les points de division équidistante de référence (Q) qui comportent un point de début au niveau du centre de rotation (O), à partir d'une somme d'un vecteur de point de division qui comporte un point de début au niveau du centre de rotation (O) et un point de fin au niveau du point de division équidistante de référence (Q) pour lequel le vecteur de point d'interpolation est calculé, et d'un vecteur de direction qui comporte un point de début au niveau du point de division équidistante de référence (Q), fait face à une direction du vecteur normal unitaire au niveau du point de division équidistante de référence (Q) pour lequel le vecteur de point d'interpolation est calculé et est d'une amplitude qui est égale à une amplitude du vecteur normal unitaire multipliée par une distance prédéterminée (h) ;

un moyen de calcul de données de point d'interpolation (27) qui est configuré pour calculer des données de direction de profondeur de points d'interpolation (R) qui sont chacun un point de fin du vecteur de point d'interpolation, en utilisant les données de forme tridimensionnelles ; et

un moyen de déplacement de point d'interpolation (28) qui est configuré pour déplacer les points d'interpolation (R) sur un cercle parfait ($C_K$) qui est concentrique à un cercle (Co) qui est centré autour du centre de rotation (O) et qui présente la même longueur circonférentielle que la longueur circonférentielle (1) de la ligne de référence (K), en utilisant la longueur circonférentielle (1) de la ligne de référence (K) et la distance prédéterminée (h).

5. Appareil (10) pour inspecter un aspect d'un corps rotatif annulaire (T) selon la revendication 4, dans lequel le corps rotatif annulaire (T) comprend un pneumatique (T).

FIG. 1

10: TIRE APPEARANCE INSPECTION APPARATUS

16:COMPUTING UNIT

20: DATA CORRECTION MEANS

21 REFERENCE LINE SETTING MEANS

25 NORMAL VECTOR CALCULATING MEANS

18 STORAGE MEANS

22 EQUIANGULAR DIVISION POINT SETTING MEANS

26 INTERPOLATION POINT VECTOR CALCULATING MEANS

17 IMAGE PROCESSING MEANS

23 CIRCUMFERENTIAL LENGTH CALCULATING MEANS

27 INTERPOLATION POINT DATA CALCULATING MEANS

24 EQUIDISTANT DIVISION POINT SETTING MEANS

28 INTERPOLATION POINT MOVING MEANS

19 DETERMINING MEANS

θ  S

1 1

11B  11A

S

T

1 2

1 3

M

1 5 ROTATING ANGLE DETECTING MEANS

1 4 MOTOR CONTROL MEANS

FIG. 2

FIG. 3

FIG. 4

$$I_{P,i} = \sum_{k=1}^{i-1} \overline{P_k \, P_{k+1}} \qquad I_{Q,j} = \frac{I}{n}\,(j-1)$$

$$\overrightarrow{OQ} = \frac{(I_{P,i+1} - I_{Q,j})\,\overrightarrow{OP_i} + (I_{Q,j} - I_{P,i})\,\overrightarrow{OP_{i-1}}}{(I_{P,i+1} - I_{P,i})}$$

FIG. 5

FIG. 6A

FIG. 6B

FIG. 7

FIG. 8

```
                    ┌─────────┐
                    │  START  │
                    └─────────┘
                         │
                         │         ┌─S10
          ┌──────────────────────┐
          │  SET TIRE IN PLACE   │
          └──────────────────────┘
                         │
                         │          ┌─S11
          ┌──────────────────────┐
          │ CAPTURE SLIT IMAGES S│
          │ AND DETECT           │
          │ ROTATING ANGLE θ     │
          └──────────────────────┘
                         │
                         │       ┌─S12                ┌──────────────┐
          ┌──────────────────────┐                   │  j=1, k=1    │
          │ CALCULATE   THREE-   │                   └──────────────┘
          │ DIMENSIONAL DATA     │                          │
          └──────────────────────┘                          │
                         │                                   │     ┌─S17
                         │    ┌─S13          ┌──────────────────────────┐
          ┌──────────────────────┐           │ CALCULATE INTERPOLATION  │
          │ SET REFERENCE        │           │ POINTS Rj,k              │
          │ LINE                 │           └──────────────────────────┘
          └──────────────────────┘                          │      ┌─S18      ┌────────┐
                         │                                   │                 │ j=j+1  │
                         │    ┌─S14          ┌──────────────────────────┐      └────────┘
          ┌──────────────────────┐           │ CALCULATE DEPTH-DIRECTION│
          │ SET REFERENCE EQUIANGULAR│       │ DATA Zj,k OF INTERPOLATION│
          │ DIVISION POINTS Pi   │           │ POINTS                   │
          └──────────────────────┘           └──────────────────────────┘
                         │                                   │     ┌─S19
                         │    ┌─S15          ┌──────────────────────────┐
          ┌──────────────────────┐           │ MOVE  INTERPOLATION      │
          │ CALCULATE CIRCUMFERENTIAL│       │ POINTS                   │
          │ LENGTH               │           └──────────────────────────┘
          └──────────────────────┘                          │
                         │                                   │   ┌─S20
                         │    ┌─S16                       ╱──────────╲
          ┌──────────────────────┐           END OF CORRECTION        No
          │ SET REFERENCE EQUIDISTANT│       IN ANGULAR    ───────────────┐
          │ DIVISION POINTS Qj   │           DIRECTION?                   │
          └──────────────────────┘              ╲──────────╱         ┌────────┐
                         │                            │ Yes          │ k=k+1  │
                         └────────────────            │              └────────┘
                                                      │   ┌─S21
                                                   ╱──────────╲
                                       END OF CORRECTION        No
                                       IN RADIAL    ───────────────┘
                                       DIRECTION?
                                          ╲──────────╱
                                               │ Yes
                                               │   ┌─S22
                                   ┌──────────────────────┐
                                   │ DETERMINE ACCEPTANCE │
                                   │ OR REJECTION OF TIRE │
                                   └──────────────────────┘
                                               │
                                         ┌─────────┐
                                         │   END   │
                                         └─────────┘
```

17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1873485 A
- EP 2711693 A
- EP 2390621 A
- EP 2799848 A
- JP 2006300619 A
- JP 2012242186 A
- JP 2011247646 A
- JP 2013137239 A
- JP 2008221896 A